# EUROPEAN PATENT APPLICATION

(11) **EP 4 841 768 A1**
(43) Date of publication of application: **18.11.2026**
(21) Application number: 24934411.0
(22) Date of filing: 08.04.2024
(51) Int. Cl.: H01M 50/244

(54) **ENERGY STORAGE CONTAINER**

(71) Applicant: Contemporary Amperex Technology Co., Limited, Ningde, Fujian 352100 (CN)
(72) Inventor: PENG, Haoran, Ningde, Fujian 352100 (CN); ZHANG, Mingliang, Ningde, Fujian 352100 (CN); SU, Haibin, Ningde, Fujian 352100 (CN)
(74) Representative: Aera A/S
(86) International application number: PCT/CN2024/086600
(87) International publication number: WO 2025/213325

(57) **Abstract**

An energy storage container. The energy storage container comprises a container body (1) and at least two batteries (2); the container body (1) comprises a frame (11) and a shielding plate (12); the frame (11) comprises a bearing frame (111) and a diagonal bracing beam (112), wherein the bearing frame (111) is formed with an accommodating space (111a), the shielding plate (12) covers an outer surface of the bearing frame (111), and the diagonal bracing beam (112) is arranged at the bottom of the bearing frame (111) and extends in a first direction in a plane perpendicular to a vertical direction; the length direction of the container body (1), the width direction of the container body (1) and the vertical direction are perpendicular to each other, and the length direction and the width direction are both obliquely intersected with the first direction; and the at least two batteries (2) are arranged in the accommodating space (111a). The diagonal bracing beam (112) extends in the first direction in the plane perpendicular to the vertical direction, such that the accommodating space (111a) is large enough to arrange therein as many batteries as possible; and the diagonal bracing beam (112) can bear a load and enhance the bottom stability of the bearing frame (111), such that the structural strength of the bearing frame (111) is effectively improved, thereby improving the structural strength of the container body (1), and reducing the probability of deformation of the bottom of the container body (1) due to stress.

## Description

### TECHNICAL FIELD

The present application relates to the field of battery technologies, and in particular, to an energy storage container.

### BACKGROUND

Batteries are increasingly used in daily life and production. For example, new energy vehicles equipped with batteries have been widely used, and batteries can be used to provide power to new energy vehicles in whole or in part. In addition, batteries are increasingly used in energy storage and other fields.

Batteries are disposed in a container body of an energy storage container. The energy storage container is an electric energy storage and transfer device, and is an important component in the development of distributed energy, smart grids, and energy internet in the energy storage field. Energy storage containers usually need to be transported from a production site to a use site by land transportation and/or sea transportation. As the weight of the battery increases, the force on the container body also increases, and the container body is prone to deformation.

### SUMMARY

In view of this, embodiments of the present application expect to provide an energy storage container that can improve the structural strength of the container body.

In order to achieve the above purpose, the technical solutions of the embodiments of the present application are implemented as follows:

An embodiment of the present application provides an energy storage container, including:
a container body, including a frame and a shielding plate, where the frame includes a load-bearing frame and a diagonal brace beam, the load-bearing frame is formed with an accommodating space, the shielding plate covers an outer surface of the load-bearing frame, the diagonal brace beam is disposed at a bottom of the load-bearing frame, and the diagonal brace beam extends along a first direction in a plane perpendicular to an up-down direction, where a length direction of the container body, a width direction of the container body, and the up-down direction are perpendicular to each other, and both the length direction and the width direction are obliquely intersected with the first direction; and
at least two batteries, disposed in the accommodating space.

In the energy storage container provided by the embodiment of the present application, the container body adopts a frame and a shielding plate, and the shielding plate covers the outer surface of the load-bearing frame to prevent external objects from contacting the batteries in the accommodating space. The load-bearing frame is a hollow frame body with light self-weight, which can reduce space occupation. The diagonal brace beam extends along the first direction in a plane perpendicular to the up-down direction, the accommodating space is relatively large to arrange as many batteries as possible, and the diagonal brace beam can bear load and enhance the stability of the bottom of the load-bearing frame, effectively improving the structural strength of the load-bearing frame, thereby improving the structural strength of the container body and reducing the probability of deformation of the bottom of the container body due to stress.

In some embodiments, at least two of the diagonal brace beams are arranged along the width direction to form a support group, and at least two of the support groups are arranged at intervals along the length direction.

In this embodiment, the support group can improve the structural strength of each part of the load-bearing frame along the width direction, and at least two support groups can improve the structural strength of each part of the load-bearing frame along the length direction, thereby further improving the overall structural stability of the load-bearing frame.

In some embodiments, the frame includes a longitudinal reinforcing beam extending along the length direction, two of the longitudinal reinforcing beams are both disposed at the bottom of the load-bearing frame, the two longitudinal reinforcing beams are arranged at intervals along the up-down direction, and one end of at least part of the diagonal brace beam is clamped between the two longitudinal reinforcing beams.

In this embodiment, on the one hand, the two longitudinal reinforcing beams can further improve the structural strength of a bottom of the frame; on the other hand, one end of the diagonal brace beam is fixed by the two longitudinal reinforcing beams, which can improve the connection stability of the diagonal brace beam.

In some embodiments, the frame includes a transverse reinforcing beam extending along the width direction, one end of the transverse reinforcing beam is clamped between the two longitudinal reinforcing beams, and the other end of the transverse reinforcing beam is connected to the load-bearing frame.

In this embodiment, the transverse reinforcing beam can improve the structural stability of the longitudinal reinforcing beam and improve the structural strength of the bottom of the load-bearing frame.

In some embodiments, the frame includes at least two partition frames, at least two of the partition frames are arranged at intervals along the length direction to divide the accommodating space into at least two battery compartments, and the batteries are disposed in the battery compartments.

In this embodiment, the partition frame is connected to the load-bearing frame, the partition frame can provide supporting force for the load-bearing frame, improving the overall structural strength of the load-bearing frame, while arranging the batteries in separate stacks within the battery compartments can improve the stability of battery placement.

In some embodiments, the partition frame includes a rectangular frame and a reinforcing column, the rectangular frame is connected to the load-bearing frame, the reinforcing column is disposed in a space enclosed by the rectangular frame, and the reinforcing column is connected to a side edge of the rectangular frame along the up-down direction.

In this embodiment, the reinforcing column can effectively enhance the structural strength of the rectangular frame, and the four sides of the rectangular frame are all connected to the load-bearing frame, effectively improving the structural strength of the load-bearing frame.

In some embodiments, the shielding plate covering a top of the load-bearing frame is a top plate, the top plate includes at least two plate bodies laid flat in a horizontal direction, and a connection position of each of the plate bodies is located above the partition frame.

In this embodiment, the connection position of each plate body is located above the partition frame, the partition frame can provide upward supporting force for the connection position of each plate body, reducing the risk of deformation at the connection position of the plate bodies.

In some embodiments, the frame includes a reinforcing plate, the reinforcing plate includes a first portion extending along the up-down direction and a second portion extending along the horizontal direction, and the reinforcing plate is disposed at at least one corner of the load-bearing frame.

In this embodiment, the reinforcing plate is substantially L-shaped and is used to enhance the structural stability at a corner of the load-bearing frame.

In some embodiments, in the three directions of the length direction, the width direction, and the up-down direction, dimensions of the container body in two of the directions are the same as dimensions of a standard container having a preset dimension, a dimension of the container body in the other direction is smaller than the dimension of the standard container having the preset dimension, and the preset dimension is 10 feet, 20 feet, 30 feet, 40 feet, or 45 feet.

In this embodiment, on the one hand, when the container body has a reduced dimension in the length direction or the width direction relative to the standard container, a projected area of the container body on a horizontal plane is smaller than a projected area of the standard container on the horizontal plane. Under the same weight condition, the intensity of pressure of the container body is greater than that of the standard container, and the diagonal brace beam can effectively improve the structural strength of the bottom of the load-bearing frame, so that a bottom surface of the frame can bear a relatively large load, and the container body can be placed smoothly on a bearing surface such as the ground. On the other hand, the dimensions of the container body in two of the directions are the same as the dimensions of the standard container having the preset dimension, and the dimension of the container body in the other direction is smaller than the dimension of the standard container having the preset dimension. That is, the dimension of the container body is smaller than the preset dimension of the standard container in only one direction. The preset dimension of the standard container meets the requirements of industry standards and can be used across regions. In this way, without significantly changing the dimension of the container body, the container body can reduce weight and can also match conventional transportation and transfer equipment to meet the transportation requirements of land transportation and/or sea transportation.

In some embodiments, a total weight of all the batteries is 10 tons to 25 tons.

In this embodiment, on the one hand, the total weight of all the batteries meets the transportation requirements, and the energy density of the energy storage container is relatively high. On the other hand, the structural strength of the bottom of the frame is good and can bear batteries having a relatively heavy total weight without deformation.

In some embodiments, at least one of a main control box, a power distribution box, a liquid cooling unit, a general control box, and a busbar is not provided in the container body.

In this embodiment, on the one hand, the space originally occupied by at least one of the main control box, the power distribution box, the liquid cooling unit, the general control box, and the busbar in the container body can be used for placing batteries, thereby increasing the quantity of batteries in the container body, maximizing the utilization of the internal space of the container body, and thus increasing the energy density of the entire energy storage container. On the other hand, the types of devices inside the container body are reduced, which can reduce the frequency of operation and maintenance of the energy storage container during normal use.

In some embodiments, the accommodating space is filled with the batteries, a fire protection system, a liquid cooling pipeline, and a cable system.

In this embodiment, the internal space of the container body can be maximized to a certain extent, increasing the energy density of the energy storage container.

In some embodiments, the liquid cooling pipeline includes a main liquid inlet pipeline, a main liquid return pipeline, a liquid inlet branch, and a liquid return branch, each of the batteries corresponds to one of the liquid inlet branches and one of the liquid return branches, each of the liquid inlet branches is in communication with the main liquid inlet pipeline, and each of the liquid return branches is in communication with the main liquid return pipeline.

In this embodiment, the liquid inlet branch and the liquid return branch enable each battery to contact the cooling liquid to facilitate sufficient heat exchange. The cooling liquid is concentrated into the container body through the main liquid inlet pipeline and then is distributed through the liquid inlet branch, which can simplify the cooling liquid inlet path, save pipelines, save space, and reduce the total weight of the liquid cooling pipeline. The cooling liquid is concentrated and discharged from the container body through the main liquid return pipeline, which can simplify the cooling liquid discharge path and save pipelines.

In some embodiments, two of the shielding plates facing different directions in a circumferential direction respectively form a maintenance opening and a cable outlet opening, and both the maintenance opening and the cable outlet opening are in communication with the accommodating space.

In this embodiment, the maintenance opening and the cable outlet opening are respectively formed in the circumferential direction of the container body. Stacking at least two container bodies along the up-down direction does not block the maintenance opening and the cable outlet opening, and the maintenance opening and the cable outlet opening are located on two shielding plates facing different directions and do not interfere with each other, which not only facilitates personnel to enter and exit the maintenance opening, but also facilitates external circuit connection.

In some embodiments, the energy storage container includes a thermal insulation layer, and the thermal insulation layer is disposed between the shielding plate and the load-bearing frame.

In this embodiment, the thermal insulation layer is used to provide a thermal insulation effect, reducing heat exchange between the interior of the container body and the external environment, so that the temperature of the battery during charging and discharging is affected by the external environment as little as possible, while also improving the heat exchange efficiency of the liquid cooling unit.

### BRIEF DESCRIPTION OF DRAWINGS

FIG. 1 is a schematic structural diagram of a first type of energy storage container according to an embodiment of the present application;
FIG. 2 is a schematic diagram of a partial structure of the container body in FIG. 1;
FIG. 3 is a schematic diagram of a frame of the first type of energy storage container shown in FIG. 1;
FIG. 4 is an enlarged schematic diagram of position A in FIG. 3;
FIG. 5 is a schematic diagram of a partial structure of the first type of energy storage container shown in FIG. 1;
FIG. 6 is a schematic diagram of the first type of energy storage container shown in FIG. 1 stacked in an up-down direction;
FIG. 7 is a schematic structural diagram of a second type of energy storage container according to an embodiment of the present application;
FIG. 8 is a schematic structural diagram of the second type of energy storage container in FIG. 7 from another perspective; and
FIG. 9 is a schematic diagram of assembly of the second type of energy storage container in a plane perpendicular to an up-down direction.

### DESCRIPTION OF EMBODIMENTS

The following describes in detail embodiments of technical solutions of the present application with reference to the accompanying drawings. The following embodiments are merely intended for a clearer description of the technical solutions of the present application and therefore are merely used as examples which do not constitute any limitation on the protection scope of the present application.

Unless otherwise defined, all technical and scientific terms used herein shall have the same meanings as commonly understood by persons skilled in the art to which the present application relates. The terms used herein are intended to merely describe the specific embodiments rather than to limit the present application.

In the description of the embodiments of the present application, the terms "first", "second", and the like are merely intended to distinguish between different objects, and shall not be understood as any indication or implication of relative importance or any implicit indication of the number, sequence or primary-secondary relationship of the technical features indicated.

In this specification, reference to "embodiment" means that specific features, structures, or characteristics described with reference to the embodiment may be included in at least one embodiment of the present application. The term "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

It should be noted that, in the embodiments of the present application, a length direction is represented by X, a width direction is represented by Y, and an up-down direction is represented by Z, where Z1 represents upward, the downward direction is opposite to the upward direction, and Z2 represents downward.

In the related art, the demand for energy density of energy storage containers is increasing. If the energy density of the energy storage container is increased, the weight of the batteries in the container body increases, resulting in increased stress on a bottom of the container body, and the container body is prone to deformation.

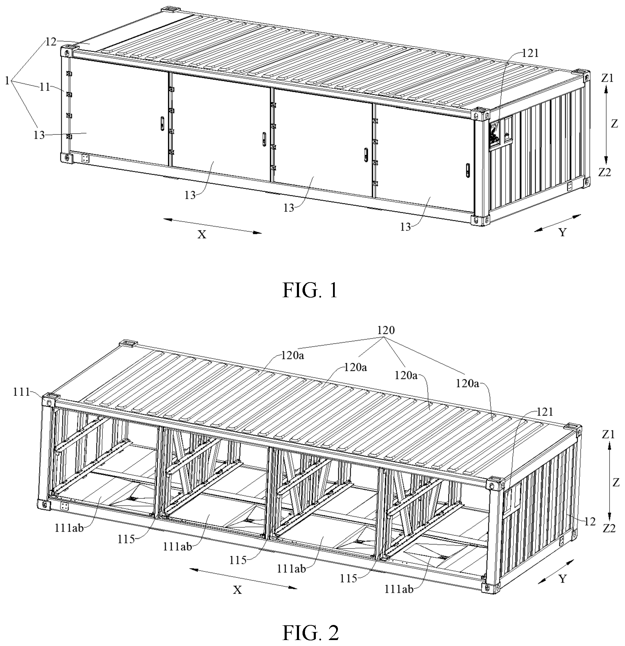

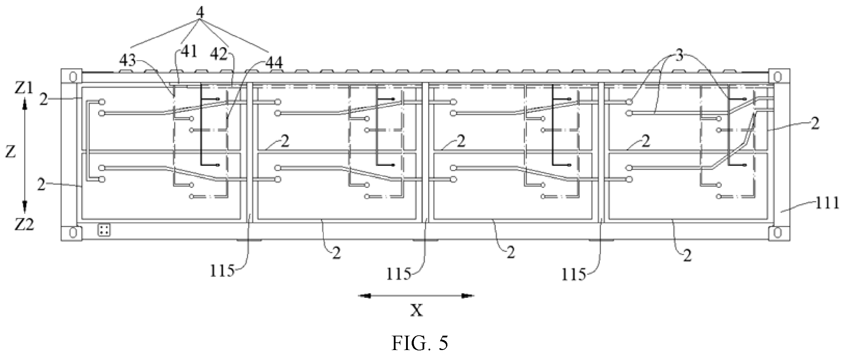

Referring to FIG. 1 and FIG. 5, an embodiment of the present application provides an energy storage container, and the energy storage container includes a container body 1 and at least two batteries 2.

Referring to FIG. 1 to FIG. 5, the container body 1 includes a frame 11 and a shielding plate 12, where the frame 11 includes a load-bearing frame 111 and a diagonal brace beam 112, the load-bearing frame 111 is formed with an accommodating space 111a, the shielding plate 12 covers an outer surface of the load-bearing frame 111, the diagonal brace beam 112 is disposed at a bottom of the load-bearing frame 111, and the diagonal brace beam 112 extends along a first direction in a plane perpendicular to an up-down direction Z, where a length direction X of the container body 1, a width direction Y of the container body 1, and the up-down direction Z are perpendicular to each other, and both the length direction X and the width direction Y are obliquely intersected with the first direction. At least two batteries 2 are disposed in the accommodating space 111a.

In the energy storage container provided by the embodiment of the present application, the container body 1 adopts a frame 11 and a shielding plate 12, and the shielding plate 12 covers the outer surface of the load-bearing frame 111 to prevent external objects from contacting the batteries 2 in the accommodating space 111a. The load-bearing frame 111 is a hollow frame body with light self-weight, which can reduce space occupation. The diagonal brace beam 112 extends along the first direction in a plane perpendicular to the up-down direction Z, the accommodating space 111a is relatively large to arrange as many batteries 2 as possible, and the diagonal brace beam 112 can bear load and enhance the stability of the bottom of the load-bearing frame 111, effectively improving the structural strength of the load-bearing frame 111, thereby improving the structural strength of the container body 1 and reducing the probability of deformation of the bottom of the container body 1 due to stress.

It should be noted that an outer contour shape of the container body 1 is a hexahedron shape. In the embodiment of the present application, unless otherwise specified, both the length direction X and the width direction Y are based on the container body 1.

In the embodiment of the present application, the battery 2 may be a secondary battery, and the secondary battery refers to a battery that can be recharged after discharge to activate an active material and continue to be used.

The battery 2 may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and/or a lead-acid battery.

The battery 2 may be a cylindrical battery, a prismatic battery, or a battery of another shape. The prismatic battery includes a square battery or a polygonal battery, such as a hexagonal prism battery. The present application is not particularly limited.

The battery 2 includes a housing, an electrode assembly, and an electrolyte. The housing is used to encapsulate the electrode assembly, the electrolyte, and other components. For example, the electrode assembly includes a positive electrode, a negative electrode, and a separator. During the charging and discharging process of the battery 2, active ions (for example, lithium ions) in the electrolyte are intercalated and deintercalated back and forth between the positive electrode and the negative electrode to achieve charging and discharging.

In the related technologies, energy storage containers generally need to be transported from the production site to the use site by land transportation and/or sea transportation. Generally, land transportation and sea transportation have weight limits for transportation. For example, the load capacity for general road transportation does not exceed 40 tons, and the maximum weight limit for first grade highways and bridges does not exceed 50 tons, which also includes the standard axle load of transportation vehicles from 10 tons to 13 tons. As a result, the weight of energy storage containers is further restricted. The hoisting equipment in the stacking yard of the energy storage container loading terminal, such as front-handling cranes and rail-mounted cranes, is mostly limited to a weight of 35 tons to 45 tons. Generally, energy storage containers belong to Class 9 hazardous chemicals. The design of stacking yards of Class 9 hazardous chemicals at terminals is generally less than or equal to 40 tons (Class 9 dangerous goods need to be isolated from ordinary items, that is, stored separately, and there are strict requirements for the storage area in terms of environment, safety equipment, and the like). In summary, if the power of the energy storage container in the related technologies is to be increased, the weight of the energy storage container also increases accordingly. Excessive weight leads to a sharp increase in transportation difficulty and cost, which raises the requirements for a series of conventional transportation and transfer equipment involved in the above-mentioned transportation process, such as transportation vehicles, transportation roads, terminal stacking yards, hoisting equipment, or the like. It is by no means easy to improve the transportation capacity of conventional transportation and transfer equipment throughout the entire transportation process, and the investment cost is significant.

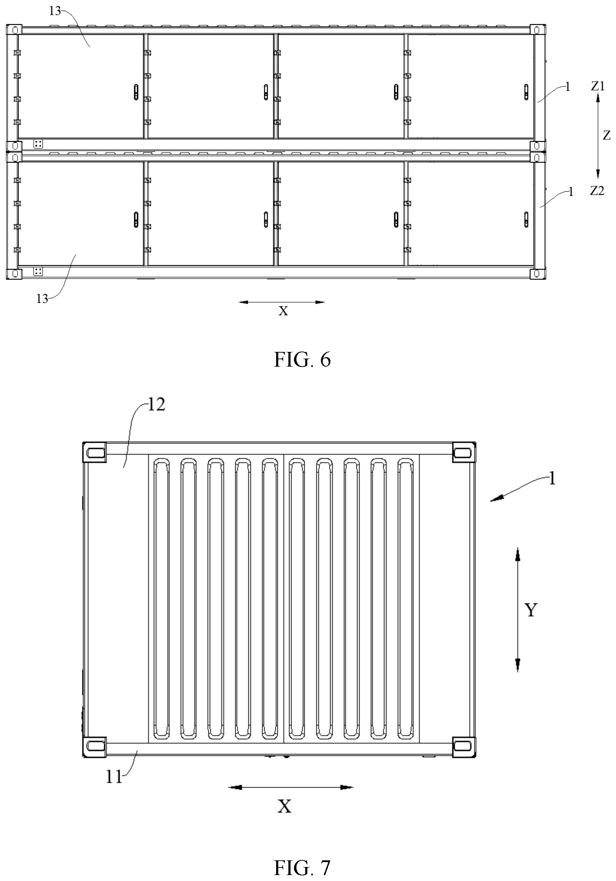

In one embodiment, referring to FIG. 1 and FIG. 7, in the three directions of the length direction X, the width direction Y, and the up-down direction Z, dimensions of the container body 1 in two of the directions are the same as dimensions of a standard container having a preset dimension, a dimension of the container body 1 in the other direction is smaller than the dimension of the standard container having the preset dimension, and the preset dimension is 10 feet, 20 feet, 30 feet, 40 feet, or 45 feet.

A standard container refers to a general container body having a preset dimension. The general container body meets the standard requirements for transportation in at least two different regions or countries, and transportation includes but is not limited to land transportation and/or sea transportation.

In this embodiment, on the one hand, when the container body 1 has a reduced dimension in the length direction X or the width direction Y relative to the standard container, a projected area of the container body 1 on a horizontal plane is smaller than a projected area of the standard container on the horizontal plane. Under the same weight condition, the intensity of pressure of the container body 1 is greater than that of the standard container, and the diagonal brace beam 112 can effectively improve the structural strength of the bottom of the load-bearing frame 111, so that a bottom surface of the frame 11 can bear a relatively large load, and the container body 1 can be placed smoothly on a bearing surface such as the ground. On the other hand, the dimensions of the container body 1 in two of the directions are the same as the dimensions of the standard container having the preset dimension, and the dimension of the container body 1 in the other direction is smaller than the dimension of the standard container having the preset dimension. That is, the dimension of the container body 1 is smaller than the preset dimension of the standard container in only one direction. The preset dimension of the standard container meets the requirements of industry standards and can be used across regions. In this way, without significantly changing the dimension of the container body 1, the container body 1 can reduce weight and can also match conventional transportation and transfer equipment to meet the transportation requirements of land transportation and/or sea transportation.

It should be understood that the dimensions of the container body 1 in each direction are the dimensions of the outer contour shape of the container body 1.

The preset dimension may be 10 feet, 20 feet, 30 feet, 40 feet, or 45 feet. The above dimensions can be defined according to the requirements of industry standards. For example, the preset dimension can be the standard requirements defined by laws, regulations, departmental rules, and the like of various countries related to land transportation and/or sea transportation. For example, the following describes each preset dimension:

10 feet may include: a dimension of 2991 mm in the length direction X, with a tolerance of 0 mm to 5 mm; a dimension of 2438 mm in the width direction Y, with a tolerance of 0 mm to 5 mm; and a dimension less than or equal to 2438 mm in the up-down direction Z, with a tolerance of 0 mm to 5 mm.

20 feet may include: a dimension of 6058 mm in the length direction X, with a tolerance of 0 mm to 6 mm; a dimension of 2438 mm in the width direction Y, with a tolerance of 0 mm to 5 mm; and a dimension of 2896 mm, 2591 mm, or less than or equal to 2438 mm in the up-down direction Z, with a tolerance of 0 mm to 5 mm.

30 feet may include: a dimension of 9125 mm in the length direction X, with a tolerance of 0 mm to 10 mm; a dimension of 2438 mm in the width direction Y, with a tolerance of 0 mm to 5 mm; and a dimension of 2896 mm, 2591 mm, or less than or equal to 2438 mm in the up-down direction Z, with a tolerance of 0 mm to 5 mm.

40 feet may include: a dimension of 12192 mm in the length direction X, with a tolerance of 0 mm to 10 mm; a dimension of 2438 mm in the width direction Y, with a tolerance of 0 mm to 5 mm; and a dimension of 2896 mm, 2591 mm, or less than or equal to 2438 mm in the up-down direction Z, with a tolerance of 0 mm to 5 mm.

45 feet may include: a dimension of 13716 mm in the length direction X, with a tolerance of 0 mm to 10 mm; a dimension of 2438 mm in the width direction Y, with a tolerance of 0 mm to 5 mm; and a dimension of 2591 mm or 2896 mm, in the up-down direction Z, with a tolerance of 0 mm to 5 mm.

In one embodiment, a total weight of all the batteries 2 is 10 tons to 25 tons. For example, the total weight of all the batteries 2 is 10 tons, 15 tons, 18 tons, 20 tons, 25 tons, or the like. The total weight of all the batteries 2 is the sum of the weights of all the batteries 2 in a single container body 1. On the one hand, the total weight of all the batteries 2 meets the transportation requirements, and the energy density of the energy storage container is relatively high. On the other hand, the structural strength of the bottom of the frame 11 is good and can bear the batteries 2 having a relatively heavy total weight without deformation.

In some embodiments, a weight of a single battery 2 is 5 kg to 60 kg. For example, the weight of a single battery 2 is 5 kg, 10 kg, 15 kg, 20 kg, 25 kg, 30 kg, 35 kg, 40 kg, 45 kg, 50 kg, 55 kg, 60 kg, or the like. The weight of a single battery 2 is appropriate, so that an appropriate quantity of batteries 2 can be placed in the container body 1, and the energy density is moderate while meeting transportation requirements.

It should be noted that the unit "kg" is kilogram.

In some embodiments, the quantity of the batteries 2 is 416 to 2080. For example, the quantity of the batteries 2 is 416, 500, 600, 700, 800, 950, 1000, 2000, 2080, or the like. The quantity of the batteries 2 refers to the quantity of the batteries 2 in a single container body 1. The weight of a single battery 2 and the quantity of the batteries 2 are reasonably matched, so that the total weight of all batteries 2 meets transportation requirements and the energy density per unit area of the container body 1 is increased.

In some embodiments, referring to FIG. 1, FIG. 5, and FIG. 6, the dimensions of the container body 1 in the length direction X and the width direction Y are the same as the dimension of a standard container having a preset dimension, and the dimension of the container body 1 in the up-down direction Z is smaller than the dimension of the standard container having the preset dimension. For example, the dimension of the container body 1 in the up-down direction Z may be one-third, one-half, or the like of the dimension of the standard container having the preset dimension. That is, the height of the container body 1 is one-half or one-third of the height dimension of the standard container. With such a design, on the one hand, each container body 1 can be transported separately, which, at the use site, can be stacked in the up-down direction Z and/or assembled along a plane perpendicular to the up-down direction Z according to requirements, thereby achieving the purpose of reducing transportation difficulty and cost. On the other hand, the dimensions of the container body 1 in the length direction X and the width direction Y are the same as the dimension of the standard container having the preset dimension, a floor area of a single container body 1 is unchanged compared with the standard container, and the foundation after at least two container bodies 1 are stacked along the up-down direction Z is relatively stable. Stacking at least two container bodies 1 along the up-down direction Z can reduce the total floor area, which facilitates the space utilization of the use site such as a power station site.

In some embodiments, the dimensions of the container body 1 in the length direction X and the up-down direction Z are the same as the dimension of the standard container having the preset dimension, and the dimension of the container body 1 in the width direction Y is smaller than the dimension of the standard container having the preset dimension. For example, the dimension of the container body 1 in the width direction Y may be one-third, one-half, or the like of the dimension of the standard container having the preset dimension. The width of the container body 1 is one-half or one-third of the width dimension of the standard container. On the one hand, each container body 1 can be transported separately, which, at the use site, can be stacked in the up-down direction Z and/or assembled along a plane perpendicular to the up-down direction Z according to requirements, thereby achieving the purpose of reducing transportation difficulty and cost. On the other hand, the floor area of a single container body 1 is reduced, which facilitates the space utilization of the use site such as a power station site.

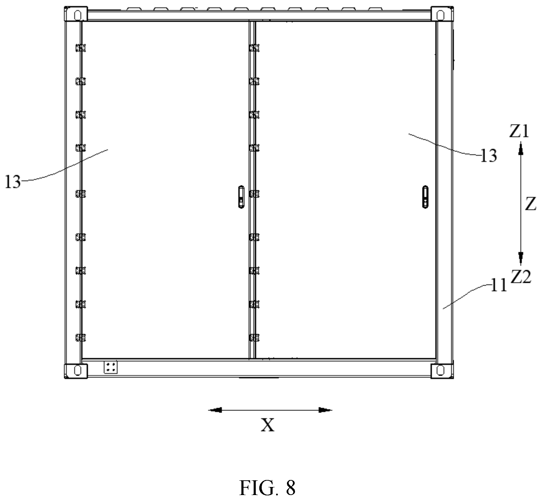

In some embodiments, referring to FIG. 7 to FIG. 9, the dimensions of the container body 1 in the width direction Y and the up-down direction Z are the same as the dimension of the standard container having the preset dimension, and the dimension of the container body 1 in the length direction X is smaller than the dimension of the standard container having the preset dimension. For example, the dimension of the container body 1 in the length direction X may be one-third, one-half, or the like of the dimension of the standard container having the preset dimension. The length of the container body 1 is one-half or one-third of the length dimension of the standard container. On the one hand, each container body 1 can be transported separately, which, at the use site, can be stacked in the up-down direction Z or assembled along a plane perpendicular to the up-down direction Z according to requirements, thereby achieving the purpose of reducing transportation difficulty and cost. On the other hand, the floor area of a single container body 1 is reduced, which facilitates the space utilization of the use site such as a power station site.

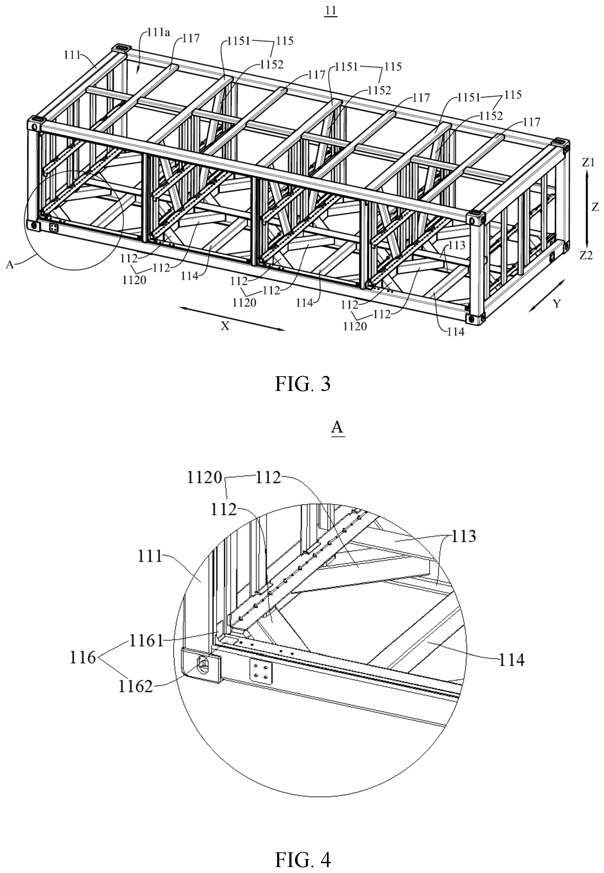

In one embodiment, referring to FIG. 3 and FIG. 4, at least two diagonal brace beams 112 are arranged along the width direction Y to form a support group 1120, and at least two support groups 1120 are arranged at intervals along the length direction X. The support group 1120 can improve the structural strength of each part of the load-bearing frame 111 along the width direction Y, and at least two support groups 1120 can improve the structural strength of each part of the load-bearing frame 111 along the length direction X, thereby further improving the overall structural stability of the load-bearing frame 111.

In some embodiments, extension directions of at least two diagonal brace beams 112 are the same, and extension directions of at least two diagonal brace beams 112 are different. That is, the plurality of diagonal brace beams 112 may have a plurality of extension directions.

A material of the load-bearing frame 111 is not limited. For example, the material of the load-bearing frame 111 includes but is not limited to metal materials, such as steel.

A material of the diagonal brace beam 112 is not limited. For example, the material of the diagonal brace beam 112 includes but is not limited to metal materials, such as steel.

The connection manner between the diagonal brace beam 112 and the load-bearing frame 111 is not limited. For example, the diagonal brace beam 112 and the load-bearing frame 111 may be non-detachably connected or detachably connected. Non-detachable connections include but are not limited to welding, or the like.

In one embodiment, referring to FIG. 3 and FIG. 4, the frame 11 includes a longitudinal reinforcing beam 113 extending along the length direction X, two longitudinal reinforcing beams 113 are both disposed at the bottom of the load-bearing frame 111, the two longitudinal reinforcing beams 113 are arranged at intervals along the up-down direction Z, and one end of at least part of the diagonal brace beams 112 is clamped between the two longitudinal reinforcing beams 113. For example, two ends of the longitudinal reinforcing beam 113 along the length direction X are connected to the load-bearing frame 111. For example, one end of part of the diagonal brace beam 112 is clamped between the two longitudinal reinforcing beams 113, and one end of the remaining part of the diagonal brace beam 112 is not clamped between the two longitudinal reinforcing beams 113. For another example, one end of all the diagonal brace beams 112 is clamped between the two longitudinal reinforcing beams 113.

In this embodiment, on the one hand, the two longitudinal reinforcing beams 113 can further improve the structural strength of a bottom of the frame 11; on the other hand, one end of the diagonal brace beam 112 is fixed by the two longitudinal reinforcing beams 113, which can improve the connection stability of the diagonal brace beam 112.

A material of the longitudinal reinforcing beam 113 is not limited. For example, the material of the longitudinal reinforcing beam 113 includes but is not limited to metal materials, such as steel.

The connection manner between the longitudinal reinforcing beam 113 and the load-bearing frame 111 is not limited. For example, the longitudinal reinforcing beam 113 and the load-bearing frame 111 may be non-detachably connected or detachably connected. Non-detachable connections include but are not limited to welding, or the like.

In one embodiment, referring to FIG. 3 and FIG. 4, in a single support group 1120, two diagonal brace beams 112 of the support group 1120 form a pair, extension directions of the pair of diagonal brace beams 112 intersect, and at least two pairs of diagonal brace beams 112 are arranged along the width direction Y. That is, a pair of diagonal brace beams 112 of the support group 1120 is substantially in a splayed shape, one end of one of the pair of diagonal brace beams 112 is connected to the longitudinal reinforcing beam 113 and the other end is connected to the load-bearing frame 111, and two ends of the other one of the pair of diagonal brace beams 112 are connected to the load-bearing frame 111.

In one embodiment, referring to FIG. 3 and FIG. 4, the frame 11 includes a transverse reinforcing beam 114 extending along the width direction Y, one end of the transverse reinforcing beam 114 is clamped between the two longitudinal reinforcing beams 113, and the other end of the transverse reinforcing beam 114 is connected to the load-bearing frame 111. The transverse reinforcing beam 114 can improve the structural stability of the longitudinal reinforcing beam 113 and improve the structural strength of the bottom of the load-bearing frame 111.

In some embodiments, referring to FIG. 3 and FIG. 4, at least two transverse reinforcing beams 114 are arranged at intervals along the length direction X. In this way, the structural stability of different parts of the longitudinal reinforcing beam 113 along the length direction X can be improved.

The longitudinal reinforcing beam 113 may be a plate.

Both the diagonal brace beam 112 and the transverse reinforcing beam 114 may adopt pipes with a quadrilateral cross-sectional shape. Under the condition that the strength requirements are met, the wall thickness and/or the cross-sectional area of the pipe can be changed according to requirements to avoid design redundancy caused by excessive wall thickness of the pipe.

In some embodiments, referring to FIG. 2 to FIG. 4, the frame 11 includes at least two partition frames 115, at least two of the partition frames 115 are arranged at intervals along the length direction X to divide the accommodating space 111a into at least two battery compartments 111ab, and the batteries 2 are disposed in the battery compartments 111ab. The partition frame 115 is connected to the load-bearing frame 111, the partition frame 115 can provide supporting force for the load-bearing frame 111, improving the overall structural strength of the load-bearing frame 111, while arranging the batteries 2 in separate stacks within the battery compartments 111ab can improve the stability of placement of the batteries 2.

In some embodiments, referring to FIG. 2 to FIG. 4, the partition frame 115 includes a rectangular frame 1151 and a reinforcing column 1152, the rectangular frame 1151 is connected to the load-bearing frame 111, the reinforcing column 1152 is disposed in a space enclosed by the rectangular frame 1151, and the reinforcing column 1152 is connected to a side edge of the rectangular frame 1151 along the up-down direction Z. In this way, the reinforcing column 1152 can effectively enhance the structural strength of the rectangular frame 1151, and the four sides of the rectangular frame 1151 are all connected to the load-bearing frame 111, effectively improving the structural strength of the load-bearing frame 111.

In some embodiments, referring to FIG. 2 to FIG. 4, the shielding plate 12 covering a top of the load-bearing frame 111 is a top plate 120, the top plate 120 includes at least two plate bodies 120a laid flat in a horizontal direction, and a connection position of each plate body 120a is located at a position Z1 above the partition frame 115. For example, the connection position of each plate body 120a is located at a position Z1 above the rectangular frame 1151. The connection position of each plate body 120a is located at a position Z1 above the partition frame 115, the partition frame 115 can provide upward supporting force for the connection position of each plate body 120a, reducing the risk of deformation at the connection position of the plate body 120a.

The connection manner between the respective plate bodies 120a includes but is not limited to welding.

In some embodiments, the load-bearing frame 111 may include four longitudinal rods extending along the length direction X, four vertical rods extending along the up-down direction Z, and four cross rods extending along the width direction Y, and the above rods together form the edges of a hexahedron. In this way, the load-bearing frame 111 forms a hollow hexahedron, and the six faces of the hexahedron are all covered with the shielding plates 12. The longitudinal rods, vertical rods, and cross rods may all adopt pipes with a quadrilateral cross-sectional shape.

In some embodiments, referring to FIG. 4, the frame 11 includes a reinforcing plate 116, the reinforcing plate 116 includes a first portion 1161 extending along the up-down direction Z and a second portion 1162 extending along the horizontal direction, and the reinforcing plate 116 is disposed at at least one corner of the load-bearing frame 111. The reinforcing plate 116 is substantially L-shaped and is used to enhance the structural stability at a corner of the load-bearing frame 111.

In some embodiments, at least one of a main control box, a power distribution box, a liquid cooling unit, a general control box, and a busbar is not provided in the container body 1. In this embodiment, the present application breaks the convention in that at least one of the main control box, the power distribution box, the liquid cooling unit, the general control box, and the busbar is not provided in the container body 1. With such design, on the one hand, the space originally occupied by at least one of the main control box, the power distribution box, the liquid cooling unit, the general control box, and the busbar in the container body 1 can be used for placing the batteries 2, thereby increasing the quantity of the batteries 2 in the container body 1, maximizing the utilization of the internal space of the container body 1, and thus increasing the energy density of the entire energy storage container. On the other hand, the types of devices inside the container body 1 are reduced, which can reduce the frequency of operation and maintenance of the energy storage container during normal use.

The main control box can be used to provide a control function for the battery 2. The power distribution box can be used to provide power supply and circuit protection functions for electrical devices. The liquid cooling unit can be used to drive the flow of cooling liquid. The general control box can be used to provide monitoring and management functions for the battery 2. The busbar can be used to connect multiple cable branches of the energy storage container. It can be understood that the main control box, the power distribution box, the liquid cooling unit, the general control box, and the busbar can all adopt structures in the prior art.

The cooling liquid is a liquid used for heat exchange with the battery 2. For example, the cooling liquid includes but is not limited to water liquid.

In some embodiments, referring to FIG. 3 and FIG. 5, the accommodating space 111a is filled with the batteries 2, a fire protection system, a liquid cooling pipeline 4, and a cable system 3. That is, only the batteries 2, the fire protection system, the liquid cooling pipeline 4, and the cable system 3 may be disposed in the container body 1. In this way, the internal space of the container body 1 can be maximized to a certain extent, increasing the energy density of the energy storage container.

The fire protection system is used to provide a fire extinguishing function. The liquid cooling pipeline 4 is used to circulate the cooling liquid to exchange heat with the battery 2. The liquid cooling pipeline 4 can be formed by connecting pipes. For example, the liquid cooling pipeline 4 can be in communication with an external pipeline through a liquid cooling pipeline adapter plate. The cable system 3 is used to be electrically connected to the battery 2 to achieve electric energy and signal transmission. The cable system 3 can be formed by connecting cables. For example, the cable system 3 can be used to be electrically connected to at least one of a main control box, a power distribution box, a general control box, and a busbar outside the container body 1. The cable system 3 may include a power distribution line and a communication signal transmission line. For example, the cable system 3 can be connected to an external circuit through a high-voltage and low-voltage output adapter plate.

In some embodiments, referring to FIG. 5, the liquid cooling pipeline 4 includes a main liquid inlet pipeline 41, a main liquid return pipeline 42, a liquid inlet branch 43, and a liquid return branch 44. Each battery 2 corresponds to one liquid inlet branch 43 and one liquid return branch 44. Each liquid inlet branch 43 is in communication with the main liquid inlet pipeline 41, and each liquid return branch 44 is in communication with the main liquid return pipeline 42. For example, if the quantity of the batteries 2 is at least two, then the quantity of the liquid inlet branches 43 and the quantity of the liquid return branches 44 are both at least two. That is, the batteries 2, the liquid inlet branches 43, and the liquid return branches 44 may be in one-to-one correspondence.

The cooling liquid can enter the container body 1 through the main liquid inlet pipeline 41, then flow through the battery 2 where it is located through the liquid inlet branch 43 to exchange heat with the battery 2. The cooling liquid after heat exchange converges into the main liquid return pipeline 42 through the liquid return branch 44, and the cooling liquid of all the liquid return branches 44 can flow out of the container body 1 through the main liquid return pipeline 42.

In this embodiment, the liquid inlet branch 43 and the liquid return branch 44 enable each battery 2 to contact the cooling liquid to facilitate sufficient heat exchange. The cooling liquid is concentrated into the container body 1 through the main liquid inlet pipeline 41 and then is distributed through the liquid inlet branch 43, which can simplify the cooling liquid inlet path, save pipelines, save space, and reduce the total weight of the liquid cooling pipeline 4. The cooling liquid is concentrated and discharged from the container body 1 through the main liquid return pipeline 42, which can simplify the cooling liquid discharge path and save pipelines.

It can be understood that the battery 2, the fire protection system, and the cable system 3 can adopt structures in the prior art.

In some embodiments, referring to FIG. 1 to FIG. 3, two shielding plates 12 facing different directions in a circumferential direction respectively form a maintenance opening and a cable outlet opening 121, and both the maintenance opening and the cable outlet opening 121 are in communication with the accommodating space 111a. The maintenance opening is a window for operators to enter and exit the accommodating space 111a to maintain devices inside the container body 1. The cable outlet opening 121 is a window for cables inside the container body 1 to connect to an external circuit. The maintenance opening and the cable outlet opening 121 are respectively formed in the circumferential direction of the container body 1. Stacking at least two container bodies 1 along the up-down direction Z does not block the maintenance opening and the cable outlet opening 121, and the maintenance opening and the cable outlet opening 121 are located on two shielding plates 12 facing different directions and do not interfere with each other, which not only facilitates personnel to enter and exit the maintenance opening, but also facilitates external circuit connection.

It should be noted that the circumferential direction is a direction surrounding a straight line extending along the up-down direction Z. The two shielding plates 12 facing different directions along the circumferential direction refer to two shielding plates 12 facing different directions in the circumferential direction. For example, taking the first direction as the front-back direction and the second direction as the left-right direction as an example, for example, the two shielding plates 12 facing different directions may be a front shielding plate 12 and a back shielding plate 12 of the container body 1; for another example, the two shielding plates 12 facing different directions may be a left shielding plate 12 and a right shielding plate 12 of the container body 1; for another example, the two shielding plates 12 facing different directions may be one being the front shielding plate 12 or the back shielding plate 12, and the other being the left shielding plate 12 or the right shielding plate 12.

In some embodiments, referring to FIG. 1, the container body 1 includes a door body 13, and the door body 13 is used to selectively open or close the maintenance opening. For example, one end of the door body 13 is rotatably connected to the container body 1, and the other end of the door body 13 can be opened and closed.

In some embodiments, referring to FIG. 1 and FIG. 2, one shielding plate 12 of the container body 1 along the width direction Y is formed with a maintenance opening, and one shielding plate 12 of the container body 1 along the length direction X is formed with a cable outlet opening 121. With such design, the maintenance opening and the cable outlet opening 121 are respectively formed on two shielding plates 12 adjacent along the circumferential direction. With such design, the shielding plates 12 of two container bodies 1 away from the cable outlet opening 121 can abut against each other, reducing a gap between the container bodies 1, facilitating the assembly of the container bodies 1 along the length direction X or the width direction Y at the use site, and improving the site utilization rate of the use site such as a power station.

In some embodiments, the energy storage container includes a thermal insulation layer, and the thermal insulation layer is disposed between the shielding plate 12 and the load-bearing frame 111. The thermal insulation layer is used to provide a thermal insulation effect, reducing heat exchange between the interior of the container body 1 and the external environment, so that the temperature of the battery 2 during charging and discharging is affected by the external environment as little as possible, while also improving the heat exchange efficiency of the liquid cooling unit.

In some embodiments, the thermal insulation layer is a ceramic fiber board. Compared with conventional rock wool, the ceramic fiber board has a relatively smaller thickness under the condition that the flame retardant and thermal insulation capabilities are roughly unchanged, thereby further reducing the overall weight of the energy storage container.

In some embodiments, the shielding plate 12 includes a corrugated plate, such as a low-wave corrugated plate.

In some embodiments, referring to FIG. 3, the frame 11 includes a support beam 117 disposed at the top of the load-bearing frame 111, and two ends of the support beam 117 along the width direction Y are connected to the load-bearing frame 111. For example, the support beam 117 may extend along the width direction Y. The support beam 117 enhances the structural strength of the top of the load-bearing frame 111.

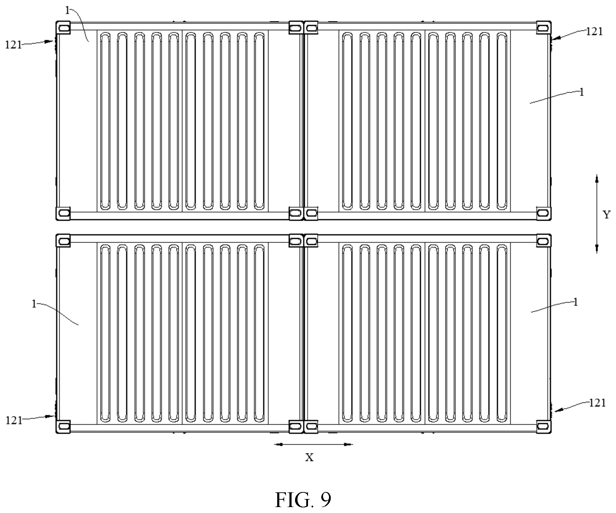

In some embodiments, referring to FIG. 9, a stacking unit includes at least one container body 1 or at least two container bodies 1 stacked along the up-down direction Z, and at least two stacking units can be assembled in a horizontal plane. Two stacking units form a module, cable outlet openings 121 of the two stacking units of the module may face away from each other, and opposing end faces of the two stacking units of the module may abut against each other. For example, the cable outlet openings 121 in the two stacking units of the module face the left side and the right side, respectively, and the opposing end faces of the two stacking units of the module may abut against each other. For another example, the cable outlet openings 121 in the two stacking units of the module face the front side and the back side, respectively, and the opposing end faces of the two stacking units of the module may abut against each other.

It can be understood that when at least two stacking units are assembled in a horizontal plane, two adjacent container bodies 1 along the front-back direction or the left-right direction are arranged at intervals to form an operation and maintenance channel, and the operation and maintenance channel can be used for operators to pass through, so that the operators can move to the location of the container body 1 that needs maintenance.

In some embodiments, the two stacking units of the module are arranged along the front-back direction, and at least two modules can be arranged at intervals along the left-right direction. In the left-right direction, the spacing space between two adjacent modules is the operation and maintenance channel.

In other embodiments, the two stacking units of the module are arranged along the left-right direction, and at least two modules can be arranged at intervals along the front-back direction. In the front-back direction, the spacing space between two adjacent modules is the operation and maintenance channel.

As an example, referring to FIG. 1 to FIG. 6, the accommodating space 111a is provided with the batteries 2, a fire protection system, a liquid cooling pipeline 4, and a cable system 3, dimensions of the container body 1 in the length direction X and the width direction Y are the same as the dimension of a standard container having the preset dimension, and a dimension of the container body 1 in the up-down direction Z is one-half of the dimension of the standard container having the preset dimension. For example, a flatbed truck with a horizontal bearing area of 20 feet is generally used to transport energy storage containers. The projected area of the container body 1 of the present application on the horizontal plane is the same as that of the standard container, both being 20 feet. At least two container bodies 1 can be separately transported to the use site such as a power station site by 20-foot flatbed trucks. The axle load distribution of the flatbed truck during transportation is more uniform and the transportation is safer. At least two container bodies 1 are stacked along the up-down direction Z at the use site to form a stacking unit. For example, two, three, or more container bodies 1 may be stacked along the up-down direction Z to form a stacking unit.

At least two stacking units can be assembled in a horizontal plane. Two stacking units form a module, cable outlet openings 121 of the two stacking units of the module may face away from each other, and opposing end faces of the two stacking units of the module may abut against each other. For example, the cable outlet openings 121 in the two stacking units of the module face the left side and the right side, respectively, and the opposing end faces of the two stacking units of the module may abut against each other. For another example, the cable outlet openings 121 in the two stacking units of the module face the front side and the back side, respectively, and the opposing end faces of the two stacking units of the module may abut against each other. With such design, the floor area of the two stacking units of the module is approximately 40 feet, leading to a higher area utilization rate of the overall power station.

Taking sea transportation as an example, sea transportation charges berthing fees according to standard containers. If non-standard container dimensions are used, berthing fees are also charged according to standard containers. In this embodiment, the dimension of the container body 1 in the up-down direction Z is one-half of the dimension of a 20-foot standard container. Two container bodies 1 can be stacked along the up-down direction Z for sea transportation. The total height dimension after the two container bodies 1 are stacked along the up-down direction Z is the same as the height dimension of a 20-foot standard container. In this way, the two container bodies 1 can still be charged as one 20-foot standard container during sea transportation.

It can be understood that, according to the above embodiments, the dimension of the container body 1 in the up-down direction Z may be one-third or one-fourth of the dimension of the standard container having the preset dimension, or the like. During sea transportation, three or four container bodies 1 can also be stacked along the up-down direction Z, so that the total height dimension of multiple container bodies 1 stacked along the up-down direction Z is the same as the height dimension of the standard container. This also allows multiple container bodies 1 to still be charged as one standard container during sea transportation, saving transportation costs.

The container body 1 includes a frame 11 and at least two shielding plates 12. The frame 11 includes a load-bearing frame 111, a diagonal brace beam 112, a longitudinal reinforcing beam 113, a transverse reinforcing beam 114, a partition frame 115, a reinforcing plate 116, and a support beam 117. The diagonal brace beam 112, the longitudinal reinforcing beam 113, the transverse reinforcing beam 114, the partition frame 115, the reinforcing plate 116, and the support beam 117 can all improve the structural strength of the load-bearing frame 111, so that the entire frame 11 forms a cage structure with good overall rigidity, which can meet the requirements for the strength of the container body 1 in various complex force environments such as earthquakes, random vibrations, sea transportation, and stacking. Each shielding plate 12 covers an outer surface of the load-bearing frame 111. The diagonal brace beam 112 is disposed at a bottom of the load-bearing frame 111, and the diagonal brace beam 112 extends along a first direction in a plane perpendicular to an up-down direction Z. The frame 11 includes a longitudinal reinforcing beam 113 extending along the length direction X. Two longitudinal reinforcing beams 113 are both disposed at the bottom of the load-bearing frame 111. The two longitudinal reinforcing beams 113 are arranged at intervals along the up-down direction Z. One end of at least part of the diagonal brace beams 112 is clamped between the two longitudinal reinforcing beams 113. In this way, the diagonal brace beam 112 and the longitudinal reinforcing beam 113 jointly improve the strength of the bottom of the container body 1, and at least two container bodies 1 stacked along the up-down direction Z can be placed more smoothly on a bearing surface such as the ground.

The foregoing embodiments are merely for describing the technical solutions of the present application rather than limiting the present application. Although the present application has been described in detail with reference to the foregoing embodiments, persons of ordinary skill in the art should appreciate that they can still make modifications to the technical solutions described in some embodiments or make equivalent replacements to some or all technical features thereof without departing from the scope of the technical solutions of some embodiments of the present application. In particular, as long as there is no structural conflict, the various technical features mentioned in the embodiments can be combined in any manner.

## Claims

1. An energy storage container, comprising:
a container body, comprising a frame and a shielding plate, wherein the frame comprises a load-bearing frame and a diagonal brace beam, the load-bearing frame is formed with an accommodating space, the shielding plate covers an outer surface of the load-bearing frame, the diagonal brace beam is disposed at a bottom of the load-bearing frame, and the diagonal brace beam extends along a first direction in a plane perpendicular to an up-down direction, wherein a length direction of the container body, a width direction of the container body, and the up-down direction are perpendicular to each other, and both the length direction and the width direction are obliquely intersected with the first direction; and
at least two batteries, disposed in the accommodating space.

2. The energy storage container according to claim 1, wherein at least two of the diagonal brace beams are arranged along a width direction to form a support group, and at least two of the support groups are arranged at intervals along a length direction.

3. The energy storage container according to claim 1, wherein the frame comprises a longitudinal reinforcing beam extending along a length direction, two of the longitudinal reinforcing beams are both disposed at a bottom of the load-bearing frame, the two longitudinal reinforcing beams are arranged at intervals along an up-down direction, and one end of at least part of the diagonal brace beam is clamped between the two longitudinal reinforcing beams.

4. The energy storage container according to claim 3, wherein the frame comprises a transverse reinforcing beam extending along a width direction, one end of the transverse reinforcing beam is clamped between the two longitudinal reinforcing beams, and the other end of the transverse reinforcing beam is connected to the load-bearing frame.

5. The energy storage container according to claim 1, wherein the frame comprises at least two partition frames, at least two of the partition frames are arranged at intervals along a length direction to divide the accommodating space into at least two battery compartments, and the batteries are disposed in the battery compartments.

6. The energy storage container according to claim 5, wherein the partition frame comprises a rectangular frame and a reinforcing column, the rectangular frame is connected to the load-bearing frame, the reinforcing column is disposed in a space enclosed by the rectangular frame, and the reinforcing column is connected to a side edge of the rectangular frame along an up-down direction.

7. The energy storage container according to claim 5, wherein the shielding plate covering a top of the load-bearing frame is a top plate, the top plate comprises at least two plate bodies laid flat in a horizontal direction, and a connection position of each of the plate bodies is located above the partition frame.

8. The energy storage container according to claim 1, wherein the frame comprises a reinforcing plate, the reinforcing plate comprises a first portion extending along an up-down direction and a second portion extending along a horizontal direction, and the reinforcing plate is disposed at at least one corner of the load-bearing frame.

9. The energy storage container according to claim 1, wherein in three directions of a length direction, a width direction, and an up-down direction, dimensions of the container body in two of the directions are the same as dimensions of a standard container having a preset dimension, a dimension of the container body in the other direction is smaller than the dimension of the standard container having the preset dimension, and the preset dimension is 10 feet, 20 feet, 30 feet, 40 feet, or 45 feet.

10. The energy storage container according to claim 1, wherein a total weight of all the batteries is 10 tons to 25 tons.

11. The energy storage container according to claim 1, wherein at least one of a main control box, a power distribution box, a liquid cooling unit, a general control box, and a busbar is not provided in the container body.

12. The energy storage container according to claim 1, wherein the accommodating space is filled with the batteries, a fire protection system, a liquid cooling pipeline, and a cable system.

13. The energy storage container according to claim 12, wherein the liquid cooling pipeline comprises a main liquid inlet pipeline, a main liquid return pipeline, a liquid inlet branch, and a liquid return branch, each of the batteries corresponds to one of the liquid inlet branches and one of the liquid return branches, each of the liquid inlet branches is in communication with the main liquid inlet pipeline, and each of the liquid return branches is in communication with the main liquid return pipeline.

14. The energy storage container according to any one of claims 1 to 13, wherein two of the shielding plates facing different directions in a circumferential direction respectively form a maintenance opening and a cable outlet opening, and both the maintenance opening and the cable outlet opening are in communication with the accommodating space.

15. The energy storage container according to any one of claims 1 to 13, wherein the energy storage container comprises a thermal insulation layer, and the thermal insulation layer is disposed between the shielding plate and the load-bearing frame.
